# EUROPEAN PATENT APPLICATION

(11) **EP 0 931 956 A1**
(43) Date of publication of application: **28.07.1999**
(21) Application number: 98309081.2
(22) Date of filing: 05.11.1998
(51) Int. Cl.: F16F 13/14

(54) **Vibration damping apparatus**

(30) Priority: 22.01.1998 GB 9801374
(71) Applicant: DRAFTEX INDUSTRIES LIMITED, Edinburgh EH2 3AP, Scotland (GB)
(72) Inventor: Pean, Thomas, 44000 Namtes (FR); Masson, Stephane, 44800 Saint Herblain (FR)
(74) Representative: Foster, David Martyn

(57) **Abstract**

An engine mount for damping vibrations between a rigid armature (16) for connection to the engine of a motor vehicle and a rigid cover member (10) for connection to the body or chassis of the vehicle comprises a thick conically shaped rubber wall (18) integrally moulded with a thin flexible wall (26). The rubber is bonded to a rigid metal peripheral member (24) defining a channel (30,30A). A plate (32) fixed to the cover (10) closes off the hollow spaces under the walls (18,26) to define working and compensation chambers respectively which are connected by the channel (30,30A). The chambers and the communicating channel are filled with liquid. The peripheral member (24) defines a slot (40) having apertures connecting it respectively to the working and compensation chambers (36,38). A thin flexible rubber valve member (46) is located in the slot (40) with clearance. The valve member (46) oscillates in the slot in response to pressure fluctuations in the liquid in the working chamber (36) caused by low amplitude vibrations and transmits these fluctuations to the liquid in the compensation chamber. However, the valve member (40) is held stationary in response to larger amplitude vibrations and forces the oscillating liquid to flow through the communicating channel (30,30A).

## Description

The invention relates to vibration damping apparatus for damping vibration of a first rigid element relative to a second rigid element, comprising a first rigid member for connection to the first rigid element, resilient material connected to the first member and having a relatively thick wall extending therefrom and embracing a first hollow space, the relatively thick wall being integral with a relatively thin flexible wall embracing a second hollow space, a second rigid member for connection to the second rigid element and including closure means connected to the relatively thick wall and the relatively thin wall to close off the first and second hollow spaces to define first and second hollow chambers respectively which are filled with liquid and so that the thick wall resiliently supports the first and second members relative to each other for vibration in dependence on relative vibration of the first and second rigid elements in directions towards and away from each other, means defining a slot between two spaced walls which are respectively formed with through apertures interconnecting the slot with the first and second chambers, and a thin flexible and resilient valve member positioned in the slot so as to oscillate therein in response to low amplitude vibrations and to transmit corresponding pressure fluctuations between the liquid in the first chamber and the liquid in the second chamber.

Such apparatus is shown in EP-A-0 709 593. In this apparatus, however, the valve member is integral with and integrally moulded with the stiff resilient material. This places restrictions on the parameters of the valve member and may complicate the moulding operation.

According to the invention, the apparatus as first set forth above is characterised in that the valve member is separate from the resilient material.

Engine mounts embodying the invention will now be described, by way of example only, with reference to the accompanying diagrammatic drawings in which:
Figure 1 is a side view of the engine mount;
Figure 2 is a section on the line II-II of Figures 1 and 3;
Figure 3 is an underside view of the engine mount;
Figure 4 is a section on the line IV-IV of Figure 3; and
Figure 5 corresponds to Figure 4 but shows an assembly operation.

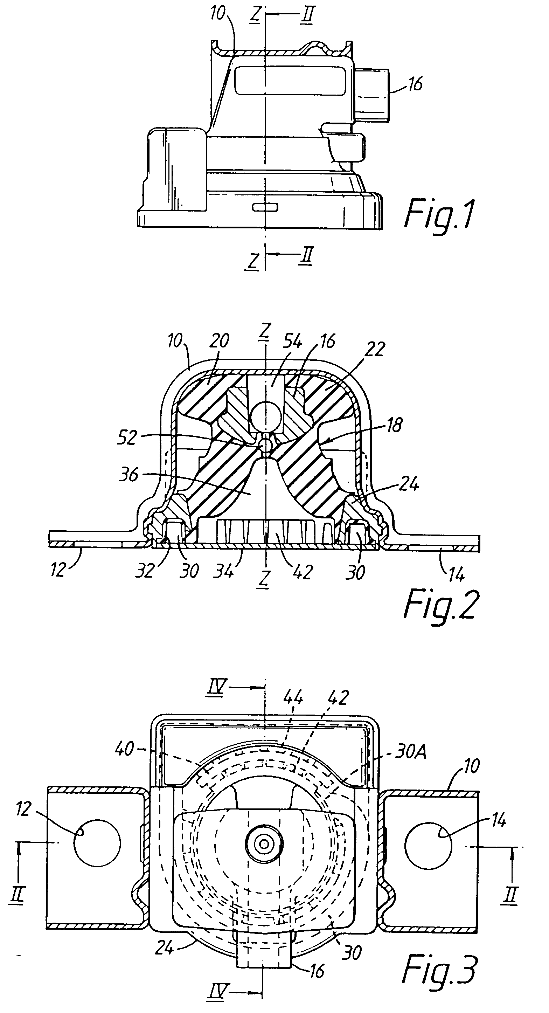

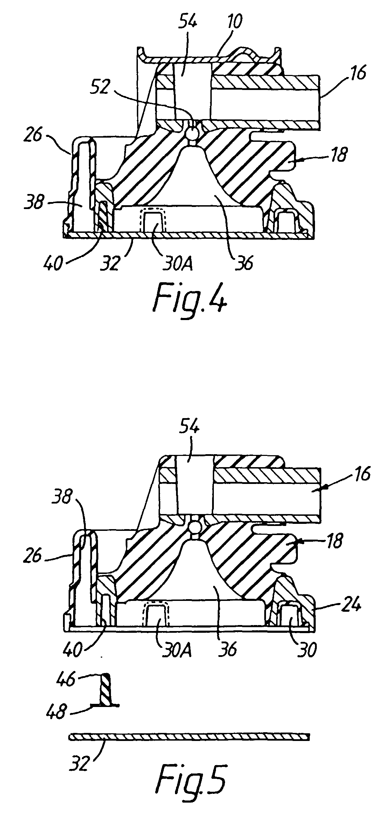

The engine mount comprises an outer metal casing 10 (see Figure 2 in particular) which is provided with holes 12,14 by means of which the casing 10 may be bolted to the chassis or body of the vehicle. A metal rod or pin (not shown) rigid with the engine is in use fixed within a metal armature 16 (e.g. see Figure 4) defining a hollow tubular interior. In a manner to be explained, the engine mount resiliently supports the armature 16 relative to the casing 10 and damps vibrations occurring between them. These vibrations may be vibrations occasioned by the operation of the engine, the magnitude and frequency of which will depend on particular characteristics (whether, for example, the engine is idling or running at higher speed under load), or occasioned by vibratory movement of the whole mass of the engine relative to the vehicle body resulting from changes in contour of the road surface and the like.

The engine mount comprises a hollow generally conically shaped support member 18 which is made of stiff but resilient material, preferably rubber. The member 18 is bonded to the armature 16 and has extensions 20 and 22 in supporting contact with the underside of the top part of the casing 10. The enlarged base of the member 18 is bonded to a metal surround 24 (such as moulded from aluminium) which is clamped inside the casing 10 in a manner to be explained.

As shown particularly in Figures 4 and 5, the material of the member 18 is extended to define a thin wall 26 which is integral with but much more flexible than the thick-walled conical part of the member 18.

The surround 24 is formed with a channel 30 in its underside which may incorporate a sealing membrane 32.

A base plate 34 is fixed to the underside of the surround 24 and closes off the channel 30. In addition, the base plate 34 closes off the spaces under the conically shaped part of the member 18 and under the thin-wall 26, to form chambers 36 and 38. As shown dotted in the plan view of Figure 3, the channel 30 extends from an opening 30A, communicating with the chamber 36, to an opening (not shown) communicating with the chamber 38.

Chamber 36 is called the working chamber and chamber 38 is called the compensation chamber. The chambers 36,38 and the channel 30 are completely filled with liquid.

An arcuate portion of the metal surround 24, situated between the hollow chambers 36 and 38, is provided with a narrow slot 40(see Figure 5) which is apertured as shown at 42 and 44 (Figure 3) so that the interior of the slot 40 is in communication with both the chamber 36 and the chamber 38. A thin flexible valve element 46, made of resilient material such as rubber, is located within the slot 40. As shown particularly in Figure 5, the valve element 46 is provided with an integral shoulder 48. During assembly of the engine mount, the valve element 46 is inserted into the slot 40 so that the shoulder 48 bears against the mouth of the slot 40, the valve element 46 then being held in position by the base plate 34 which is thereafter placed in position and held there by crimping. The valve element 46 has a predetermined shape and thickness, as will be described in more detail below, and there is clearance between itself and the opposite faces of the slot 40 incorporating the apertures 42 and 44.

In use, the thick rubber of the conically shaped member 18 supports the metal armature 16 relative to the metal casing 10 and thus supports the engine (or partially supports it - because, of course, there would in practice be more than one engine mount). The rubber allows and supports resilient vibratory movement between the armature 16 and the casing 10 primarily along the axis Z and in other directions. As such vibrations take place, they create corresponding pressure fluctuations in the working chamber 36.

If the amplitude of the vibrations is relatively low, the pressure fluctuations within the working chamber 36 are transmitted to the liquid in the compensation chamber 38 by the valve element 46 which correspondingly oscillates within the slot 40 (Figure 5) and transmits the pressure fluctuations between the two chambers through the apertures 42,44. The thin wall 26 of the compensation chamber 38 is sufficiently flexible as to exert substantially no restraining effect on the liquid. However, when the amplitude of the vibrations is higher, the valve element 46 will be held firmly against one or other of the two apertured faces of the slot 40 and will not follow the corresponding pressure fluctuations. The pressure fluctuations now cause oscillatory movement of the liquid between the two chambers 36,38 through the channel 30. The liquid thus flows to and fro through the channel 30 at a frequency dependent on the frequency of vibrations. At a particular frequency, corresponding to the resonant frequency of the liquid in the channel 30 and dependent on the dimensions of the channel 30, the resistance to the vibratory movement of the liquid in the channel will increase suddenly and significantly, thus exerting a significant damping effect on the vibrations. The resonant frequency is selected according to a particular vibratory frequency to be damped.

The correct operation of the engine mount is, at least in part, dependent on the shape and dimensions of the flexible valve element 46 relative to the dimensions of the slot 40. Because the element 46 is moulded as a separate piece, it can be produced with exactly the required shape. Furthermore, the type of material and its mechanical characteristics (its flexibility and resilience, for example) can be selected to suit the particular functions which it is required to carry out. The use of a separate valve element 46 is thus advantageous as compared with an arrangement in which the open mouth of the slot 40 faces upwardly (instead of downwardly) and receives a valve element corresponding to the element 46 but integrally moulded with the material of the conically shaped member 18. In a case where such an integrally moulded valve element is used, it is much less easy to construct the mould to produce a very precisely defined shape for the valve element. In such an arrangement, problems can also arise during vulcanisation. Vulcanisation must be carried out in accordance with precisely defined parameters, relating especially to time and temperature, these parameters being dependent on the thickness of the material. Where a thin valve element is integrally moulded with the thick rubber of the conically shaped member 18, it is difficult to ensure correct vulcanisation of both integral parts, because of their great difference in thickness; there is a risk that the very thin material of the valve element will become over-vulcanised.

It is important to ensure that the liquid entirely fills the chambers 36 and 38 and the connecting channel 30; any air bubbles within the liquid will reduce the performance of the engine mount. In order to ensure this, and as shown particularly in Figures 2 and 4, a through passage 50 is provided, extending through the peak of the conically shaped member 18 and into the chamber 36. This passage is aligned with a transverse passage 52 through the hollow interior of the armature 16 and aligned with oppositely positioned holes in the wall of the armature. The transverse passage 52 is used for the purpose of filling the interior of the engine mount with liquid. This filling process is carried out after the base plate 34 has been sealed in position to close off the chambers 36 and 38 and the channel 30, but before the outer casing 10 is placed in position. A filling tube (not shown) is inserted through the passage 52 and the passage 54 into the interior of the chamber 36. The filling tube is firstly connected to a vacuum pump which substantially evacuates the interior of the engine mount, that is, the chambers 36 and 38 and the channel 30. By means of a change-over valve, the filling tube is disconnected from the vacuum source and immediately connected to a source of the liquid which is thus sucked into the interior of the engine mount so as completely to fill the interior without the presence of any air bubbles. The filling tube can then be removed, and the passageway 54 sealed off by insertion of a sealing plug (not shown). The casing 10 can then be mounted in position.

## Claims

1. Vibration damping apparatus for damping vibration of a first rigid element relative to a second rigid element, comprising a first rigid member (16) for connection to the first rigid element, resilient material (18) connected to the first member (16) and having a relatively thick wall extending therefrom and embracing a first hollow space (36), the relatively thick wall being integral with a relatively thin flexible wall (26) embracing a second hollow space (38), a second rigid member (10) for connection to the second rigid element and including closure means (34) connected to the relatively thick wall and the relatively thin wall (26) to close off the first and second hollow spaces to define first and second hollow chambers (36,38) respectively which are filled with liquid and so that the thick wall resiliently supports the first and second members (16,10) relative to each other for vibration in dependence on relative vibration of the first and second rigid elements in directions towards and away from each other, means defining a slot (40) between two spaced walls which are respectively formed with through apertures (42,44) interconnecting the slot (40) with the first and second chambers (36,38), and a thin flexible and resilient valve member (46) positioned in the slot (40) so as to oscillate therein in response to low amplitude vibrations and to transmit corresponding pressure fluctuations between the liquid in the first chamber (36) and the liquid in the second chamber (38), characterised in that the valve member (40) is separate from the resilient material.

2. Apparatus according to claim 1, characterised by means defining a channel (30) of predetermined cross-section and length interconnecting the first and second chambers (36,38).

3. Apparatus according to claim 2, characterised by a passage (52) extending through the thick wall of the resilient material (18) into the first chamber (36) for receiving a filling tube alternately connectable to a source of vacuum and a source of the liquid for evacuating the hollow chambers (36,38) and the connecting channel (30) and then filling them with the liquid to the exclusion of air, and a closure for sealingly closing the passage (52).

4. Apparatus according to claim 3, characterised in that the passage (52) through the thick wall of the resilient material (18) is aligned with a second passage (54) through the first rigid member (16).

5. Apparatus according to claim 2, characterised in that the first chamber (36) is substantially conical in shape with its peak connected to the first member (16) and its base connected to the second rigid member (10), and by a passage (52) extending through the peak of the first chamber (36) and into the chamber (36) for receiving a filling tube alternately connectable to a source of vacuum and a source of the liquid for evacuating the hollow chambers (36,38) and the connecting channel (30) and then filling them with the liquid to the exclusion of air, and a closure for sealingly closing the passageway.

6. Apparatus according to claim 5, characterised in that the passage (52) through the peak of the first chamber (36) is aligned with a second passage (54) through the first rigid member (16).

7. Apparatus according to any preceding claim, characterised in that the two chambers (36,38) are arranged side-by-side with the means defining the slot (40) between them.

8. Apparatus according to claim 7, characterised in that the closure means (34) is substantially planar and arranged substantially perpendicular to the said directions.

9. Apparatus according to claim 8, characterised in that the means defining the slot (40) comprises a stiff member mounted on the second rigid member (10) and bonded to the resilient material (18).

10. Apparatus according to any preceding claim, characterised in that the first chamber (36) is substantially conical in shape with its peak connected to the first member (16) and its base connected to the second rigid member (10).

11. Apparatus according to claim 10, characterised in that the second chamber (38) extends arcuately around a portion of the outside of the first chamber (36).

12. Apparatus according to any preceding claim, characterised in that the closure means (34) is connected to the second rigid member (10) and comprises a plate.

13. Apparatus according to claim 12, characterised in that the plate (34) supports a rigid curved member (24) bonded to the base of the resilient material (18) to define with it the first chamber (36).

14. Apparatus according to claim 13, characterised in that the slot (40) is defined in the curved member (24).

15. Apparatus according to claim 14, characterised in that the separate valve member (46) is held in the slot (40) by the plate (34).

16. Apparatus according to claim 2, characterised in that the closure means (34) supports a rigid curved member (24) bonded to the resilient material (18) to define with it the first chamber (36), and in that the communicating channel (30) is formed in the rigid curved member (24) and closed off by the closure means (34).

17. Apparatus according to any preceding claim, characterised in that the second rigid member (10) includes a rigid cover embracing the stiff resilient material (18) and the first rigid member (16) and rigidly connected to the closure means (34).
